# EUROPÄISCHE PATENTSCHRIFT

(11) **EP 1 711 690 B1**
(45) Veröffentlichungstag und Bekanntmachung des Hinweises auf die Patenterteilung: **03.12.2008**
(21) Anmeldenummer: 05706725.8
(22) Anmeldetag: 29.01.2005
(51) Int. Cl.: F01D 15/10, F02C 3/10, F02K 3/04, F02K 3/06

(54) **GASTURBINE, INSBESONDERE FLUGTRIEBWERK**
GAS TURBINE, ESPECIALLY AN AIRCRAFT ENGINE
TURBINE A GAZ, NOTAMMENT GROUPE MOTOPROPULSEUR

(30) Priorität: 31.01.2004 DE 102004004945
(43) Veröffentlichungstag der Anmeldung: 18.10.2006
(73) Patentinhaber: MTU Aero Engines GmbH, 80995 München (DE)
(72) Erfinder: SHARP, John, Bude, North Cornwall EX23 0AA (GB); KREINER, Andreas, 85221 Dachau (DE)
(86) Internationale Anmeldenummer: PCT/DE2005/000137
(87) Internationale Veröffentlichungsnummer: WO 2005/073519

(56) Entgegenhaltungen:
- GB-A- 1 174 969
- US-A- 2 853 638
- US-A- 5 376 827
- US-A1- 2002 122 723

## Beschreibung

Die Erfindung betrifft eine Gasturbine, insbesondere ein Flugtriebwerk, nach dem Oberbegriff des Patentanspruchs 1.

Triebwerke von Flugzeugen, sei es zivile Flugtriebwerke oder militärische Flugtriebwerke, erzeugen neben einem Vorschub zur Fortbewegung des Flugzeugs auch Energie zur Versorgung von Anbaueinrichtungen bzw. Nebenaggregaten der Gasturbine oder zur Versorgung flugzeugseitiger Systeme, wie z. B. der Klimaanlage. Bei den Anbaueinrichtungen, Nebenaggregaten oder auch flugzeugseitigen Systemen eines Flugtriebwerks kann es sich um hydraulisch, pneumatisch oder elektrisch bzw. elektromotorisch angetriebene Einrichtungen, Aggregate oder Systeme handeln.

Bei der Entwicklung von Flugzeugen ist ein eindeutiger Trend dahingehend festzustellen, dass zunehmend mehr elektrische Energie im Flugzeug benötigt wird. Dies liegt zum einen darin begründet, dass hydraulisch oder pneumatisch betriebene Flugzeugsysteme (zum Beispiel Klimaanlage oder Aktuatoren) durch elektromotorisch betriebene Systeme ersetzt werden, und dass andererseits ein immer größerer Energiebedarf pro Sitzplatz im Flugzeug benötigt wird. Die Flugtriebwerke müssen daher immer größere elektrische Leistungen bzw. eine immer größere elektrische Energie bereitstellen. Derartige Flugtriebwerke werden auch als "More Electric Engine" (MEE) bezeichnet.

Zur Erzeugung von elektrischer Energie zur Versorgung der Anbaueinrichtungen oder Nebenaggregate der Gasturbine sowie der flugzeugseitigen Systeme ist es aus dem Stand der Technik bereits bekannt, einem Kerntriebwerk der Gasturbine mechanische Energie zu entnehmen, die z. B. für den Antrieb von Pumpen und Generatoren verwendet wird. Die DE 41 31 713 C2 zeigt ein Flugtriebwerk, wobei einem Kerntriebwerk Wellenleistung entnommen wird und diese Wellenleistung Nebenaggregaten zugeführt wird.

Das Dokument US 5 376 827 A betrifft eine stationäre Gasturbine mit einem Generator zur Erzeugung elektrischer Energie, wobei der Läufer des Generators als gegenläufige, freilaufende Generatorturbine ausgebildet ist, die angetrieben von einer heißen Gasströmung einer Niederdruckturbine rotiert. Eine radial innen beschaufelte Trommel der Generatorturbine wirkt direkt mit einem diese umgebenden Ständer zusammen, wohingegen ein konventionell außen beschaufelter Rotor der Generatorturbine über eine Welle einen stromabwärtigen Läuferteil antreibt, der wiederum mit einem separaten Ständer zusammenwirkt.

Das Dokument US 2002/122723 A1 beschreibt einen elektrischen Generator und/oder Motor, der in eine Gasturbine integriert ist. Dabei sind an Laufschaufeln radial außerhalb des Strömungskanals magnetische Polstücke angeordnet, die mit den Windungen eines elektrischen Ständers zusammenwirken.

Das Dokument US-A-2 853 638 betrifft einen in den Verdichter einer Gasturbine integrierten Generator, wobei die felderzeugenden Elemente am Verdichtergehäuse um einen Laufschaufelkranz herum angeordnet sind. Der Durchgang der metallischen Schaufelspitzen durch die elektromagnetischen Einzelfelder bewirkt hier die gewünschte Stromerzeugung.

Hiervon ausgehend liegt der vorliegenden Erfindung das Problem zu Grunde, eine neuartige Gasturbine, insbesondere ein neuartiges Flugtriebwerk, mit einem optimierten elektrischen Generator zu schaffen.

Dieses Problem wird dadurch gelöst, dass die eingangs genannte Gasturbine durch die Merkmale des kennzeichnenden Teils des Patentanspruchs 1 weitergebildet ist. Erfindungsgemäß weist die Gasturbine ein Fanmodul mit mindestens einem Fan auf, wobei der oder jeder Generator stromabwärts des oder jedes Fans positioniert ist, derart, dass die oder jede freilaufende Generatorturbine des oder jedes Generators von einer Gasströmung des oder jedes Fans angetrieben wird.

Vorzugsweise ist der oder jeder Generator in ein Generatormodul integriert, wobei das Generatormodul am stromabwärts liegenden Ende eines Fanströmungskanals mit dem Fanmodul lösbar verbunden ist.

Nach einer alternativen, vorteilhaften Weiterbildung der Erfindung ist es auch möglich, einen Generator stromabwärts des Fanmoduls und einen weiteren Generator stromabwärts der Niederdruckturbine der Gasturbine zu positionieren, wobei hierdurch einerseits Bewegungsenergie der das Fanmodul verlassenden Bypass-Gasströmung und andererseits Bewegungsenergie der die Niederdruckturbine verlassenden Gasströmung in elektrische Energie gewandelt wird.

Bevorzugte Weiterbildungen der Erfindung ergeben sich aus den abhängigen Unteransprüchen und der nachfolgenden Beschreibung. Ausführungsbeispiele der Erfindung werden, ohne hierauf beschränkt zu sein, an Hand der Zeichnung näher erläutert. Dabei zeigen:

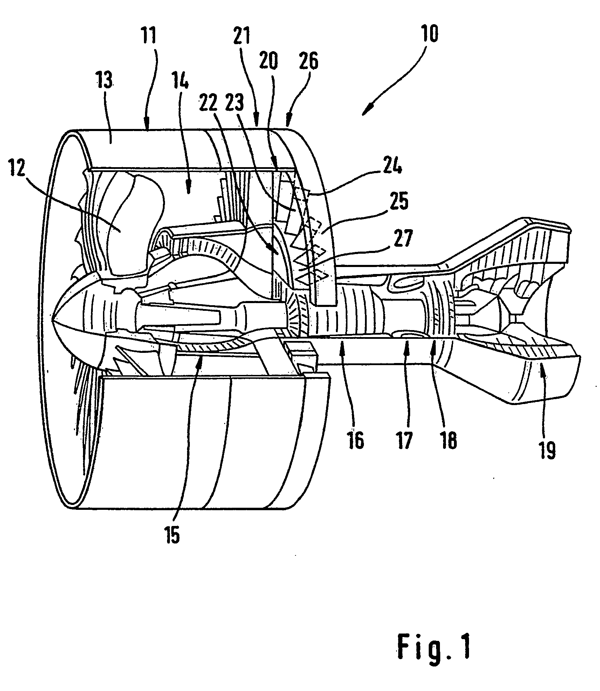

- Fig. 1: eine schematisierte Darstellung einer erfindungsgemäßen Gasturbine.

Nachfolgend wird die hier vorliegende Erfindung unter Bezugnahme auf Fig. 1 in größerem Detail beschrieben.

Fig. 1 zeigt eine als Flugtriebwerk ausgebildete Gasturbine 10 in einer teilweise geschnittenen, perspektivischen Seitenansicht. Die Gasturbine 10 der Fig. 1 verfügt über ein Fanmodul 11 mit einem sich drehenden Lüfter bzw. Fan 12, wobei der Fan 12 von einem Gehäuse 13 des Fanmoduls 11 umgeben ist. Stromabwärts des Fans 12 schließt sich ein Fanströmungskanal 14 an. Der Fan 12 wirkt als Niederdruckverdichter, wobei sich stromabwärts des Fans 12 weiterhin ein Mitteldruckverdichter 15 sowie ein Hochdruckverdichter 16, eine Brennkammer 17, eine Hochdruckturbine 18 sowie eine Niederdruckturbine 19 anschließen. Der Mitteldruckverdichter 15, der Hochdruckverdichter 16, die Brennkammer 17, die Hochdruckturbine 18 und die Niederdruckturbine 19 bilden zusammen das sogenannte Kerntriebwerk der Gasturbine 10. Ein Teil der von dem als Niederdruckverdichter wirkenden Fan 12 erzeugten Gasströmung gelangt in das Kerntriebwerk, ein anderer Teil gelangt in den Fanströmungskanal 14. Der in den Fanströmungskanal 14 gelangende Anteil der vom Fan 12 erzeugten Gasströmung bezeichnet man als Bypass-Gasströmung.

Im Sinne der hier vorliegenden Erfindung wird nun vorgeschlagen, der Gasturbine mindestens einen Generator zur Erzeugung elektrischer Energie zuzuordnen, wobei ein Läufer eines jeden Generators als freilaufende Generatorturbine ausgebildet ist, und wobei der Läufer angetrieben von einer Gasströmung relativ zu einem Ständer des jeweiligen Generators rotiert und so aus der Bewegungsenergie der Gasströmung elektrische Energie erzeugt.

Im bevorzugten Ausführungsbeispiel der Fig. 1 ist der Gasturbine 10 ein Generator 20 zugeordnet, wobei der Generator 20 in ein Generatormodul 26 integriert ist, und wobei das Generatormodul 26 an einem stromabwärts liegenden Ende 21 des Fanmoduls 11 bzw. des Fanströmungskanals 14 positioniert ist. Im bevorzugten Ausführungsbeispiel der Fig. 1 wird ein als freilaufende Generatorturbine ausgebildeter Läufer 22 des Generators 20 demnach von der Bypass-Gasströmung des Fanmoduls 11 angetrieben, und der Generator 20 erzeugt aus der Bewegungsenergie der Bypass-Gasströmung des Fanmoduls 11 elektrische Energie. Wie der Fig. 1 entnommen werden kann, verfügt der Läufer 22 des Generators 20 über mehrere rotierende Schaufeln 23, wobei radial außenliegenden Enden der Schaufeln 23 Polstücke 24 zugeordnet sind. Der von den Schaufeln 23 und den Polstücken 24 gebildete Läufer 22 des Generators 20 ist radial außen von einem Ständer 25 des Generators 20 umschlossen, wobei der Ständer 25 Windungen und magnetische Schaltkreise zur Erzeugung der elektrischen Energie aufweist.

Am radial innenliegenden Ende sind die Schaufeln 23 des Läufers 22 an einem äußeren, rotierenden Lagerring 27 eines Drehlagers befestigt. Das Lager ist demnach wie das gesamte Generatormodul 26 stromabwärts des Fanmoduls 11 positioniert und arbeit daher in einer relativ kalten und relativ sauberen Umgebung.

Im bevorzugten Ausführungsbeispiel der hier vorliegenden Erfindung ist das den Generator 20 aufweisende Generatormodul 26 lösbar mit dem Fanmodul 11 verbunden. Ein Außendurchmesser des Generatormoduls 26 ist dabei an den Außendurchmesser des Fanmoduls 11 derart angepasst, dass das Generatormodul 26 radial nicht gegenüber dem Fanmodul 11 vorsteht. Die Verbindung des Generatormoduls 26 mit dem Fanmodul 11 kann durch eine Vielzahl von Befestigungsmitteln erfolgen, insbesondere durch Sicherungsbolzen oder sogenannte V-Klammern. Durch die lösbare Anbindung des Generatormoduls 26 an das Fanmodul 11 ist sichergestellt, dass das Generatormodul 26 zu Wartungsarbeiten auf einfache Art und Weise vom Fanmodul 11 demontiert werden kann.

Im Ausführungsbeispiel der Fig. 1 ist der Generator 20 des Generatormoduls 26 einstufig ausgebildet, d.h. er verfügt über einen Läufer 22 mit mehreren dem Läufer 22 zugeordneten Schaufeln 23. Im Sinne der hier vorliegenden Erfindung kann jedoch auch ein Generator verwendet werden, der mehrere als freilaufende Generatorturbinen ausgebildete Läufer umfasst, der demnach mehrstufig ausgebildet ist. Dabei können die mehreren als freilaufende Generatorturbinen ausgebildeten Läufer entweder gleichsinnig oder gegensinnig rotieren.

Der Läufer 22 des Generators 20 verfügt, wie bereits erwähnt, über mehrere mit dem Läufer 22 rotierende Schaufeln 23. Der Läufer 22 verfügt über eine geringere Anzahl von Schaufeln als der Fan 12 des Fanmoduls 11. Daraus folgt, dass der Läufer 22 des Generators 20 weitestgehend unempfindlich gegenüber Vogelschlag oder auch Hagelschlag ist.

In der einfachsten Ausführung des Generators 20 sind die Schaufeln 23 des sich drehenden Läufers 22 feststehend ausgebildet, was bedeutet, dass die Schaufeln 23 stets mit demselben Anströmwinkel von der Bypass-Gasströmung des Fanmoduls 11 angeströmt werden. Im Sinne der hier vorliegenden Erfindung ist es jedoch auch möglich, die Schaufeln 23 des Läufers 22 verstellbar zu gestalten. Hierdurch kann der Anströmwinkel der Schaufeln 23 derart eingestellt werden, dass die Abgabeleistung des Generators 20 an die Betriebsbedingungen der Gasturbine 10 angepasst ist. Hierdurch ist es möglich, der Bypass-Gasströmung des Fanmoduls 11 ein Optimum an Energie zu entziehen und damit eine höhere elektrische Energie zu erzeugen. Hierdurch kann demnach die Effektivität des Generators 20 gesteigert werden.

Die im Zusammenhang mit Fig. 1 beschriebene, erfindungsgemäße Ausgestaltung der Gasturbine 10 verfügt über den Vorteil, dass zur Erzeugung elektrischer Energie mithilfe des Generators 20 der Aufbau der Gasturbine 10, insbesondere der Aufbau eines Kerntriebwerks der Gasturbine 10, nicht geändert werden muss. Den aus dem Stand der Technik bekannten Konstruktionsprinzipien zur Erzeugung elektrischer Energie an einer Gasturbine ist allesamt gemeinsam, dass dem Kerntriebwerk der Gasturbine Wellenleistung entnommen wird. Die hier vorliegende Erfindung kehrt sich von diesem Prinzip ab und schlägt eine Gasturbine 10 mit dem Generator 20 vor, der aus einer Gasströmung, vorzugsweise aus der Bypass-Gasströmung des Fanmoduls 11, elektrische Energie erzeugt. Dies hat den Vorteil, dass der Generator 20 in einer relativ sauberen und relativ kalten Umgebung arbeitet. Der Generator 20 muss demnach so gut wie nicht gekühlt werden. Weiterhin sind keine konstruktiven Änderungen am Kerntriebwerk der Gasturbine erforderlich.

Im Unterschied zum gezeigten Ausführungsbeispiel ist es selbstverständlich möglich, die Polstücke des Läufers 22 den radial innenliegenden Enden der Schaufeln 23 zuzuordnen. In diesem Fall wäre der Ständer des Generators nicht radial außen bezüglich des Läufers 22 positioniert, sondern vielmehr radial innen. Der Läufer würde demnach in diesem Fall den Ständer des Generators radial außen umschließen.

An dieser Stelle sei darauf hingewiesen, dass der Generator 20 des Ausführungsbeispiels der Fig. 1 auch im Motorbetrieb eingesetzt werden kann. Dies kann zum Beispiel dann von Nutzen sein, wenn sich ein Flugzeug, welches derartige Gasturbinen aufweist, in Parkposition befindet und eine Drehung des Fans 12 infolge von Windeinflüssen verhindert werden soll. Weiterhin kann dann, wenn der Generator 20 im Motorbetrieb betrieben wird, am Auslass des Fans 12 ein negativer Druck erzeugt werden, um so ein effektiveres Beschleunigen des Fans 12 zu ermöglichen.

Im Unterschied zum gezeigten Ausführungsbeispiel der Fig. 1 ist es weiterhin möglich, einen Generator mit einem als freilaufende Generatorturbine ausgebildeten Läufer stromabwärts der Niederdruckturbine 19 zu positionieren. In diesem Fall würde der Läufer von der die Niederdruckturbine 19 verlassenden Gasströmung angetrieben und aus der Bewegungsenergie der die Niederdruckturbine 19 verlassenden Gasströmung würde dann elektrische Energie erzeugt. In diesem Fall müsste lediglich die Konstruktion des Generators auf einen Einsatz in höheren Temperaturbereichen ausgelegt werden.

Ebenfalls ist es möglich, einen ersten Generator stromabwärts des Fanmoduls 11 und einen weiteren Generator stromabwärts der Niederdruckturbine 19 zu positionieren. In diesem Fall würde sowohl aus der Bewegungsenergie der Bypass-Gasströmung des Fanmoduls 11 als auch aus der Bewegungsenergie der die Niederdruckturbine 19 verlassenden Gasströmung elektrische Energie erzeugt.

Bevorzugt ist jedoch die in Fig. 1 gezeigte Anordnung, bei welcher der Generator 20 stromabwärts des Fanmoduls 11 positioniert und in ein als separate Baugruppe ausgebildetes Generatormodul 26 integriert ist, wobei das Generatormodul 26 lösbar mit dem Fanmodul 11 befestigt ist. Mit einem derartigen Generator lassen sich während des normalen Betriebs der Gasturbine 10 mehrere Hundert Kilowatt an elektrischer Energie erzeugen. Während eines sogenannten "Engine Windmilling" kann der Generator 20 eine elektrische Notfallleistung von ca. 30 kW erzeugen.

Das erfindungsgemäße Prinzip zur Bereitstellung einer sogenannten More Electric Engine kann bei einer Vielzahl von Flugtriebwerken zum Einsatz kommen, so zum Beispiel bei Turboprop-Triebwerken, bei Flugtriebwerken mit einer hohen Bypass-Gasströmung des Fanmoduls, wie sie bei zivilen Flugtriebwerken üblich ist, bei Flugtriebwerken mit einer niedrigen Bypass-Gasströmung des Fanmoduls, wie sie bei militärischen Flugtriebwerken üblich ist, oder auch in Triebwerken, die in einem Helikopter Verwendung finden.

## Patentansprüche

1. Gasturbine, insbesondere Flugtriebwerk, mit mindestens einem Verdichter (15, 16), mindestens einer Brennkammer (17), mindestens einer Turbine (18, 19) und mindestens einem Generator (20) zur Erzeugung elektrischer Energie, wobei der oder jeder Generator (20) mindestens einen Ständer (25) und mindestens einen Läufer (22) aufweist, und wobei der oder jeder Läufer (22) des oder jedes Generators (20) als freilaufende Generatorturbine ausgebildet ist, die angetrieben von einer Gasströmung relativ zu dem jeweiligen Ständer (25) des jeweiligen Generators rotiert und so aus der Bewegungsenergie der Gasströmung elektrische Energie erzeugt,
**dadurch gekennzeichnet,**
**dass** dieselbe weiterhin ein Fanmodul (11) mit mindestens einem Fan (12) aufweist, wobei der oder jeder Generator (20) stromabwärts des oder jedes Fans (12) positioniert ist, derart, dass die oder jede freilaufende Generatorturbine des oder jedes Generators (20) von einer Gasströmung des oder jedes Fans (12) angetrieben wird.

2. Gasturbine nach Anspruch 1,
**dadurch gekennzeichnet,**
**dass** der oder jeder Generator (20) in ein Generatormodul (26) integriert ist, wobei das Generatormodul (26) am stromabwärts liegenden Ende (21) eines Fanströmungskanals (14) mit dem Fanmodul (11) lösbar verbunden ist.

3. Gasturbine nach Anspruch 1 oder 2,
**dadurch gekennzeichnet,**
**dass** der oder jeder Generator (20) aus einer Bypass-Gasströmung des Fanmoduls (11) elektrische Energie erzeugt.

4. Gasturbine nach einem der Ansprüche 1 bis 3,
**dadurch gekennzeichnet,**
**dass** der oder jeder als freilaufende Generatorturbine ausgebildete Läufer (22) des oder jedes Generators (20) mehrere rotierende Schaufeln (23) mit den Schaufel (23) zugeordneten Polstücken (24) aufweist.

5. Gasturbine nach Anspruch 4,
**dadurch gekennzeichnet,**
**dass** die Polstücke (24) radial außenliegenden Enden der rotierenden Schaufeln (23) des oder jedes als freilaufende Generatorturbine ausgebildeten Läufers (22) zugeordnet sind, wobei der jeweilige Ständer (25) des Generators den Läufer (22) radial außen umschließt.

6. Gasturbine nach Anspruch 4,
**dadurch gekennzeichnet,**
**dass** die Polstücke radial innenliegenden Enden der rotierenden Schaufeln des oder jedes als freilaufende Generatorturbine ausgebildeten Läufers zugeordnet sind, wobei der oder jeder Läufer den jeweiligen Ständer des Generators radial außen umschließt.

7. Gasturbine nach einem der Ansprüche 1 bis 6,
**dadurch gekennzeichnet,**
**dass** der oder jeder als freilaufende Generatorturbine ausgebildete Läufer (22) des oder jedes Generators (20) eine geringere Anzahl von Schaufeln aufweist als der oder jeder Fan (12) des Fanmoduls (11).

8. Gasturbine nach einem der Ansprüche 1 bis 7,
**dadurch gekennzeichnet,**
**dass** der oder jeder Generator mehrere Generatorstufen aufweist, wobei jede Generatorstufe von einem als freilaufende Generatorturbine ausgebildeten Läufer und einem zugeordneten Ständer gebildet ist.

9. Gasturbine nach einem der Ansprüche 1 bis 8,
**dadurch gekennzeichnet,**
**dass** die Schaufeln (23) des oder jedes als freilaufende Generatorturbine ausgebildeten Läufers (22) zur Anpassung des Anströmwinkels derselben verstellbar sind.

10. Gasturbine nach einem der Ansprüche 1 bis 9,
**dadurch gekennzeichnet,**
**dass** ein Generator stromabwärts des Fanmoduls und ein weiterer Generator stromabwärts des Niederdruckturbine der Gasturbine positioniert ist, wobei hierdurch einerseits Bewegungsenergie der das Fanmodul verlassenden Gasströmung und andererseits Bewegungsenergie der die Niederdruckturbine verlassenden Gasströmung in elektrische Energie gewandelt wird.

## Claims

1. A gas turbine, in particular an aircraft engine, having at least one compressor (15, 16), at least one combustion chamber (17), at least one turbine (18, 19) and at least one generator (20) for producing electric energy, wherein the or each generator (20) has at least one stator (25) and at least one rotor (22), and wherein the or each rotor (22) of the or each generator (20) is formed as a free-running generator turbine which, driven by a gas flow, rotates in relation to the respective stator (25) of the respective generator and thus produces electric energy from the kinetic energy of the gas flow, **characterised in that** the same has, furthermore, a fan module (11) with at least one fan (12), with the or each generator (20) being positioned downstream of the or each fan (12) in such a way that the or each free-running generator turbine of the or each generator (20) is driven by a gas flow of the or each fan (12).

2. A gas turbine according to claim 1, **characterised in that** the or each generator (20) is integrated in a generator module (26), with the generator module (26) being detachably connected to the fan module (11) at the downstream end (21) of a fan-flow channel (14).

3. A gas turbine according to claim 1 or 2, **characterised in that** the or each generator (20) produces electric energy from a bypass gas flow of the fan module (11).

4. A gas turbine according to one of claims 1 to 3, **characterised in that** the or each rotor (22), formed as a free-running generator turbine, of the or each generator (20) has a plurality of rotating blades (23) with pole pieces (24) associated with the blades (23).

5. A gas turbine according to claim 4, **characterised in that** the pole pieces (24) are associated with radially external ends of the rotating blades (23) of the or each rotor (22) that is formed as a free-running generator turbine, with the respective stator (25) of the generator radially surrounding the rotor (22) on the outside.

6. A gas turbine according to claim 4, **characterised in that** the pole pieces are associated with radially internal ends of the rotating blades of the or each rotor that is formed as a free-running generator turbine, with the or each rotor radially surrounding the respective stator of the generator on the outside.

7. A gas turbine according to one of claims 1 to 6, **characterised in that** the or each rotor (22) of the or each generator (20) that is formed as a free-running generator turbine has a smaller number of blades than the or each fan (12) of the fan module (11).

8. A gas turbine according to one of claims 1 to 7, **characterised in that** the or each generator has a plurality of generator stages, with each generator stage being formed by a rotor, formed as a free-running generator turbine, and an associated stator.

9. A gas turbine according to one of claims 1 to 8, **characterised in that** the blades (23) of the or each rotor (22) that is formed as a free-running generator turbine can be adjusted for adaptation of the incident flow angle of the same.

10. A gas turbine according to one of claims 1 to 9, **characterised in that** a generator is positioned downstream of the fan module, and a further generator is positioned downstream of the low-pressure turbine of the gas turbine, with as a result on the one hand kinetic energy of the gas flow leaving the fan module and on the other hand kinetic energy of the gas flow leaving the low-pressure turbine being converted into electric energy.

## Revendications

1. Turbine à gaz, en particulier groupe motopropulseur, avec au moins un compresseur (15, 16), au moins une chambre de combustion (17), au moins une turbine (18, 19) et au moins un générateur (20) pour la génération d'énergie électrique, le ou chaque générateur (20) présentant au moins un stator (25) et au moins un rotor (22), et le ou chaque rotor (22) du ou de chaque générateur (20) étant réalisé comme une turbine de générateur en roue libre qui tourne entraînée par un flux de gaz par rapport au stator (25) respectif du générateur respectif et génère donc de l'énergie électrique à partir de l'énergie de mouvement du flux de gaz, **caractérisée en ce que** celle-ci présente en outre un module de ventilateur (11) avec au moins un ventilateur (12), le ou chaque générateur (20) étant positionné en aval du ou de chaque ventilateur (12) de telle sorte que la ou chaque turbine de générateur en roue libre du ou de chaque générateur (20) soit entraînée par un flux de gaz du ou de chaque ventilateur (12).

2. Turbine à gaz selon la revendication 1, **caractérisée en ce que** le ou chaque générateur (20) est intégré dans un module de générateur (26), le module de générateur (26) étant relié de manière amovible au module de ventilateur (11) au niveau de l'extrémité (21) se trouvant en aval d'un canal de flux de ventilateur (14).

3. Turbine à gaz selon la revendication 1 ou 2, **caractérisée en ce que** le ou chaque générateur (20) génère de l'énergie électrique à partir d'un flux de gaz de dérivation du module de ventilateur (11).

4. Turbine à gaz selon l'une quelconque des revendications 1 à 3, **caractérisée en ce que** le ou chaque rotor (22) réalisé comme une turbine de générateur en roue libre du ou de chaque générateur (20) présente plusieurs aubes (23) rotatives avec des pièces polaires (24) associées aux aubes (23).

5. Turbine à gaz selon la revendication 4, **caractérisée en ce que** les pièces polaires (24) sont associées aux extrémités se trouvant radialement à l'extérieur des aubes (23) rotatives du ou de chaque rotor (22) réalisé comme une turbine de générateur en roue libre, le stator (25) respectif du générateur entourant radialement à l'extérieur le rotor (22).

6. Turbine à gaz selon la revendication 4, **caractérisée en ce que** les pièces polaires sont associées aux extrémités se trouvant radialement à l'intérieur des aubes rotatives du ou de chaque rotor réalisé comme une turbine de générateur en roue libre, le ou chaque rotor entourant radialement à l'extérieur le stator respectif du générateur.

7. Turbine à gaz selon l'une quelconque des revendications 1 à 6, **caractérisée en ce que** le ou chaque rotor (22) réalisé comme une turbine de générateur en roue libre du ou de chaque générateur (20) présente un nombre inférieur d'aubes à celui du ou de chaque ventilateur (12) du module de ventilateur (11).

8. Turbine à gaz selon l'une quelconque des revendications 1 à 7, **caractérisée en ce que** le ou chaque générateur présente plusieurs étages de générateur, chaque étage de générateur étant formé par un rotor réalisé comme une turbine de générateur en roue libre et un stator associé.

9. Turbine à gaz selon l'une quelconque des revendications 1 à 8, **caractérisée en ce que** les aubes (23) du ou de chaque rotor (22) réalisé comme une turbine de générateur en roue libre peuvent être réglées pour s'adapter à l'angle de soufflage de celle-ci.

10. Turbine à gaz selon l'une quelconque des revendications 1 à 9, **caractérisée en ce qu'**un générateur est positionné en aval du module de ventilateur et un autre générateur en aval de la turbine basse pression de la turbine à gaz, l'énergie de mouvement du flux de gaz quittant le module de ventilateur d'une part et l'énergie de mouvement du flux de gaz quittant la turbine basse pression d'autre part étant converties par là-même en énergie électrique.
